# NEUE EUROPÄISCHE PATENTSCHRIFT

(11) **EP 2 295 305 B2**
(45) Veröffentlichungstag und Bekanntmachung des Hinweises auf die Entscheidung über den Einspruch: **07.06.2017**
(45) Hinweis auf die Patenterteilung: 27.04.2011
(21) Anmeldenummer: 09170370.2
(22) Anmeldetag: 15.09.2009
(51) Int. Cl.: B61G 11/16, F16F 7/12

(54) **Energieverzehrvorrichtung, insbesondere in Gestalt einer Stoßsicherung für ein spurgeführtes Fahrzeug**
Energy consumption device, in particular in the form of impact protection for a rail-led vehicle
Dispositif de déformation d'énergie, notamment sous la forme d'une sécurité contre les chocs pour un véhicule sur rails

(43) Veröffentlichungstag der Anmeldung: 16.03.2011
(73) Patentinhaber: Voith Patent GmbH, 89522 Heidenheim (DE)
(72) Erfinder: Beika, Uwe, 03222, Lübbenau (DE); Ende, Sascha, 37632, Eschershausen (DE)
(74) Vertreter: Rupprecht, Kay

(56) Entgegenhaltungen:
- EP-A1- 0 802 100
- EP-A1- 1 905 661
- DE-A1- 3 833 048
- DE-A1- 19 717 473
- FR-A1- 2 528 928
- FR-A1- 2 775 240
- FR-A1- 2 777 251
- GB-A- 2 257 770
- US-B1- 6 601 886

## Beschreibung

Die Erfindung betrifft eine Energieverzehrvorrichtung, insbesondere in Gestalt einer Stoßsicherung für ein spurgeführtes Fahrzeug, mit einem Energieverzehrelement und einem derart mit dem Energieverzehrelement zusammenwirkenden Gegenelement, dass sich bei Überschreiten einer kritischen, in die Energieverzehrvorrichtung eingeleiteten Stoßkraft das Gegenelement und das Energieverzehrelement unter gleichzeitigem Verzehr von zumindest einem Teil der in die Energieverzehrvorrichtung eingeleiteten Stoßenergie relativ zueinander aufeinander zu bewegen, wobei das Energieverzehrelement mindestens einen Energieverzehrbereich aus Faserverbundwerkstoff aufweist.

Eine solche Vorrichtung ist z.B. durch die US-B1 6,601,886 bekannt.

Es ist bekannt, spurgeführte Fahrzeuge, wie beispielsweise Schienenfahrzeuge, mit einer Stoßsicherung auszurüsten, die mindestens eine Energieverzehrvorrichtung aufweist, welche dazu dient, die bei einem Aufprall des Fahrzeuges auf ein Hindernis anfallende Stoßenergie zumindest teilweise abzubauen. In der Regel weist eine in einer Stoßsicherung zum Einsatz kommende Energieverzehrvorrichtung ein oder mehrere Energieverzehrelemente auf. Das in der Regel destruktiv ausgebildete mindestens eine Energieverzehrelement soll dabei beispielsweise das Untergestell des spurgeführten Fahrzeuges insbesondere auch bei größeren Auffahrgeschwindigkeiten schützen.

Als destruktiv ausgebildete Energieverzehrelemente sind aus dem Stand der Technik insbesondere Verformungsrohre oder Crashboxen bekannt, bei denen durch eine definierte plastische Verformung in destruktiver Weise Stoßenergie in Verformungsarbeit und Wärme umgewandelt werden kann.

Beispielsweise betrifft die Druckschrift DE 297 03 351 U1 ein Element zum Verzehren kinetischer Energie, wobei dieses Element mechanisch nach dem Prinzip der plastischen Verformung arbeitet. Im Einzelnen wird in diesem Stand der Technik eine Energieverzehrvorrichtung vorgeschlagen, welches eine Grundplatte und eine Anschlussplatte aufweist, wobei zwischen diesen beiden Platten ein Energieverzehrelement eingespannt ist. Bei diesem Energieverzehrelement handelt es sich um dickwandiges Rohr aus Kunststoff, welches einerseits eine gewisse Anfangselastizität und andererseits einen nahezu rechteckförmigen plastischen Arbeitshub aufweist. Aus der Anfangselastizität des Energieverzehrelements ergibt sich ein Deformationsschutz bei kleinen Stößen. Nach einem Arbeitshub über die Streckgrenze hinaus tritt eine plastische Verformung des Energieverzehrelements auf, infolgedessen das Energieverzehrelement eine reduzierte Länge mit einem bauchig vergrößerten Außendurchmesser aufweist.

Andererseits ist aus der Druckschrift WO 2009/034123 A1 eine Stoßsicherung bekannt, welche sich insbesondere für die Verwendung als zusätzliche irreversible Stoßsicherungsstufe zusammen mit einem Bauteil zur Kraftübertragung eignet. Diese Stoßsicherung weist ein Energieverzehrelement in Gestalt eines Verformungsrohres sowie ein Gegenelement in Gestalt eines Kraftübertragungselementes auf. Das Gegenelement (Kraftübertragungselement) wirkt dabei mit dem Energieverzehrelement derart zusammen, dass sich nach Überschreiten einer vorab festlegbaren charakteristischen Stoßkraft das als Verformungsrohr ausgebildete Energieverzehrelement plastisch verformt und dabei zumindest einen Teil der bei der Stoßkraftübertragung anfallenden Energie abbaut. Bei der plastischen Verformung des Verformungsrohres bewegen sich das Verformungsrohr (Energieverzehrelement) und das Kraftübertragungselement (Gegenelement) relativ zueinander aufeinander zu.

Der Erfindung liegt die Aufgabe zugrunde, eine Energieverzehrvorrichtung der eingangs genannten Art, und wie sie beispielsweise aus der Druckschrift US-B1-6,601,886 bekannt ist, dahingehend weiterzubilden, dass in einer leicht zu realisierenden Weise auch hohe Stoßenergien zuverlässig abgebaut werden können, wobei gleichzeitig der Aufbau der Energieverzehrvorrichtung vereinfacht wird und dass Bruchteile, die beim Stoß entstehen, sich gefährlich verteilen.

Diese Aufgabe wird durch den Gegenstand des unabhängigen Patentanspruches 1 gelöst. Vorteilhafte Weiterbildungen der erfindungsgemäßen Lösung sind in den abhängigen Ansprüchen angegeben.

Unter dem hierin verwendeten Begriff "Gegenelement" wird ein Bauteil verstanden, welches beim Ansprechen der Energieverzehrvorrichtung die nicht-duktile Zerstörung des Faserverbundmaterials von dem Energieverzehrbereich des Energieverzehrelements bewirkt. Erfindungsgemäß ist das Gegenelement als Kolben auszuführen, welchem die Funktion der Stoßkraftübertragung auf den Energieverzehrbereich des Energieverzehrelements zukommt, wobei sich dann nach Ansprechen der Energieverzehrvorrichtung das Gegenelement relativ zu der zu schützenden Struktur, wie etwa dem Untergestell eines Schienenfahrzeuges, bewegt. Andererseits ist es selbstverständlich auch denkbar, dass das Gegenelement fest mit der zu schützenden Struktur verbunden ist, wobei sich nach Ansprechen der Energieverzehrvorrichtung das Energieverzehrelement relativ zu der zu schützenden Struktur und dem Gegenelement bewegt.

Bei der erfindungsgemäßen Lösung wird zumindest ein Teil der in die Energieverzehrvorrichtung eingeleiteten Stoßenergie dadurch abgebaut, dass der Energieverzehrbereich des Energieverzehrelementes nicht derart plastisch verformt wird, wie es bei herkömmlichen Energieverzehrvorrichtungen der Fall ist, sondern zumindest teilweise in Einzelteile zerlegt wird. Mit anderen Worten, bei Ansprechen der Energieverzehrvorrichtung wird die in die Energieverzehrvorrichtung eingeleitete Stoßenergie zum Zerfasern des Energieverzehrbereiches genutzt und somit zumindest teilweise abgebaut. Da das Zerfasern und Pulverisieren eines Werkstückes im Vergleich zu einem üblichen plastischen Verformen wesentlich mehr Energie erfordert, ist die erfindungsgemäße Energieverzehrvorrichtung insbesondere auch für Anwendungen geeignet, bei welchen hohe gewichtsspezifische Stoßenergien abzubauen sind.

Andererseits zeichnet sich ein aus Faserverbundwerkstoff ausgebildetes Energieverzehrelement im Vergleich zu herkömmlichen aus Metall ausgebildeten Energieverzehrelementen (Verformungsrohren) durch seine Leichtbauweise aus, so dass das Gesamtgewicht der Energieverzehrvorrichtung reduziert werden kann. Faserverbundwerkstoffe sind auf in polymere Matrixsysteme eingebetteten Verstärkungsfasern aufgebaut. Während die Matrix die Fasern in einer vorbestimmten Position hält, Spannungen zwischen den Fasern überträgt und die Fasern vor äußeren Einflüssen schützt, kommen den Verstärkungsfasern die tragenden mechanischen Eigenschaften zu. Als Verstärkungsfasern sind insbesondere Aramid-, Glas- und Kohlenstofffasern geeignet. Da Aramidfasern aufgrund ihrer Dehnbarkeit nur eine relativ niedrige Steifigkeit aufweisen, werden zur Ausbildung des Energieverzehrbereiches insbesondere Glas- und Kohlenstofffasern bevorzugt.

Zur Konstruktion des Energieverzehrbereiches sollte eine bestimmte Faserarchitektur oder Lagenaufbau der Fasern realisiert werden, um an den zu erwartenden Lastfall angepasste Eigenschaften des Energieverzehrelementes und der Energieverzehrvorrichtung zu erhalten. Insbesondere wird es bevorzugt, als Material des Energieverzehrbereiches einen kohlenstofffaserverstärkten Kunststoff einzusetzen, da derartige Werkstoffe sehr hohe spezifische Festigkeiten aufweisen. Indem der Anteil der in Richtung der Stoßkraftübertragung verlegten Fasern variiert wird, kann die Festigkeit und das Ansprechverhalten der Energieverzehrvorrichtung eingestellt werden.

Unter dem hier in verwendeten Ausdruck "Zerfasern des aus Faserverbundwerkstoff gebildeten Energieverzehrbereiches" ist ein (gewollt herbeigeführtes) Zerstören der Faserstruktur des Faserverbundwerkstoffes zu verstehen, aus welchem der Energieverzehrbereich gebildet ist. Ein Zerfasern des aus Faserverbundwerkstoff gebildeten Energieverzehrbereiches ist insbesondere nicht mit dem Auftreten lediglich eines (Spröd-) Bruches im Energieverzehrbereich zu vergleichen; vielmehr wird beim Zerfasern der Faserverbundwerkstoff des Energieverzehrbereiches in Einzelteile (Fragmente) bis hin zur Pulverisierung zerlegt.

Für das Energieverzehrelement und das Gegenelement kommen unterschiedliche Ausführungsvarianten in Frage. Erfindungsgemäß ist vorgesehen, das Gegenelement als Kolben und zumindest den dem Gegenelement zugewandten Bereich des Energieverzehrelementes als Zylinder auszubilden, wobei das als Kolben ausgeführte Gegenelement mit dem Energieverzehrelement derart verbunden ist, dass bei Ansprechen der Energieverzehrvorrichtung der Kolben (Gegenelement) in den Zylinder (Energieverzehrelement) hineinläuft und dabei den aus Faserverbundwerkstoff ausgebildeten Energieverzehrbereich nicht-duktil zerfasert.

Im Einzelnen ist erfindungsgemäß vorgesehen, dass ein dem Energieverzehrelement zugewandter Bereich des Gegenelementes von einem dem Gegenelement zugewandten Bereich des Energieverzehrelementes derart teleskopartig aufgenommen ist, dass die Stirnseite des dem Energieverzehrelement zugewandten Bereiches des Gegenelementes an einen Anschlag des aus Faserverbundwerkstoff gebildeten Energieverzehrbereiches anstößt. Durch diesen teleskopartigen Aufbau ist sichergestellt, dass die beim Ansprechen der Energieverzehrvorrichtung auftretende Relativbewegung zwischen dem Gegenelement und dem Energieverzehrelement geführt ist.

In einer nicht beanspruchten Ausführungsform kann zumindest der dem Energieverzehrelement zugewandte Bereich des Gegenelementes als Zylinder und das Energieverzehrelement als Kolben ausgebildet sein, wobei ein dem Gegenelement zugewandter Bereich des Energieverzehrelementes von einem dem Energieverzehrelementes zugewandten Bereich des Gegenelementes teleskopartig aufgenommen ist. Im Einzelnen sollte dabei vorzugsweise eine dem Gegenelement zugewandte Stirnseite des aus Faserverbundwerkstoff gebildeten Energieverzehrbereiches an einen Anschlag des Gegenelementes anstoßen.

Um zu erreichen, dass beim Ansprechen der Energieverzehrvorrichtung die Stoßenergie nur durch den aus Faserverbundwerkstoff ausgebildeten Energieverzehrbereich abgebaut wird, sollte die Stirnseite des dem Energieverzehrelement zugewandten Bereiches des Gegenelementes eine im Vergleich zu dem aus Faserverbundwerkstoff gebildeten Energieverzehrbereich höhere Festigkeit aufweisen. Dann nämlich ist sichergestellt, dass die beim Ansprechen der Energieverzehrvorrichtung auftretende Bewegung des Gegenelementes relativ zu dem Energieverzehrelement nur eine Zerstörung des Energieverzehrbereiches zur Folge hat, wobei die anderen Komponenten der Energieverzehrvorrichtung nicht versagen. Auf diese Weise lässt sich ein vorab festlegbarer Ereignisablauf beim Energieverzehr realisieren.

Bei der erfindungsgemäßen Energieverzehrvorrichtung ist das Gegenelement als Hohlkörper ausgebildet, welcher an seiner dem Energieverzehrelement zugewandten Stirnseite offen ist. Demnach sind die bei der Bewegung des Gegenelementes relativ zu dem Energieverzehrelement entstehenden Bruchteile des aus Faserverbundwerkstoff gebildeten Energieverzehrbereiches zumindest teilweise im Inneren des Hohlkörpers aufnehmbar. Die erfindungsgemäße Energieverzehrvorrichtung liefert somit eine nach außen vollständig gekapselte Energieverzehrvorrichtung, wobei insbesondere sichergestellt ist, dass beim Ansprechen der Energieverzehrvorrichtung keine Teile, wie etwa Bruchteile oder Faserteile des Energieverzehrbereiches, umherfliegen und möglicherweise Personen verletzen oder andere Bauteile beschädigen oder gar zerstören.

Wie bereits angedeutet, wird mit der erfindungsgemäßen Lösung ein Energieverzehr dadurch realisiert, dass beim Ansprechen der Energieverzehrvorrichtung der aus Faserverbundwerkstoff gebildete Energieverzehrbereich nach einem vorab festgelegten Ereignisablauf zumindest teilweise nicht-duktil zerfasert wird. Dabei hängt vorzugsweise die Länge des Energieverzehrbereiches, welche bei einer Bewegung des Gegenelementes relativ zu dem Energieverzehrelement nicht-duktil zerfasert wird, von der Wegstrecke der Relativbewegung zwischen dem Gegenelement und dem Energieverzehrelement ab.

Weiterhin ist die Erfindung nicht darauf beschränkt, dass ein spurgeführtes Fahrzeug, insbesondere ein Schienenfahrzeug, mit der erfindungsgemäßen Energieverzehrvorrichtung ausgerüstet wird. Vielmehr ist es ebenso denkbar, eine stationäre Anlage für den Betrieb spurgeführter Fahrzeuge, wie beispielsweise einen Gleisabschluss oder eine Prellbockanlage, mit der erfindungsgemäßen Energieverzehrvorrichtung auszustatten, um die bei einem Aufprall eines Fahrzeuges auf Teile der stationären Anlage anfallende Stoßenergie zumindest teilweise abzubauen.

Im Folgenden werden exemplarische Ausführungsformen der erfindungsgemäßen Energieverzehrvorrichtung unter Bezugnahme auf die beiliegenden Zeichnungen beschrieben.

Es zeigen:
- Fig. 1: eine exemplarische Ausführungsform der erfindungsgemäßen Energie- verzehrvorrichtung in einer dreidimensionalen Ansicht;
- Fig. 2: die in Fig. 1 dargestellte Energieverzehrvorrichtung in einer Längs- schnittdarstellung;
- Fig. 3: einen Ausschnitt aus Fig. 2 am Übergangsbereich zwischen dem Gegen- element und dem Energieverzehrbereich der in Fig. 1 exemplarisch dar- gestellten Energieverzehrvorrichtung;
- Fig. 4: eine weitere Ausführungsform einer Energieverzehrvorrichtung gemäß der vorliegenden Erfindung in einer Längsschnittdarstellung; und
- Fig. 5: einen Ausschnitt aus Fig. 4 am Übergangsbereich zwischen dem Gegen- element und dem Energieverzehrbereich der weiteren Ausführungsform der erfindungsgemäßen Energieverzehrvorrichtung.

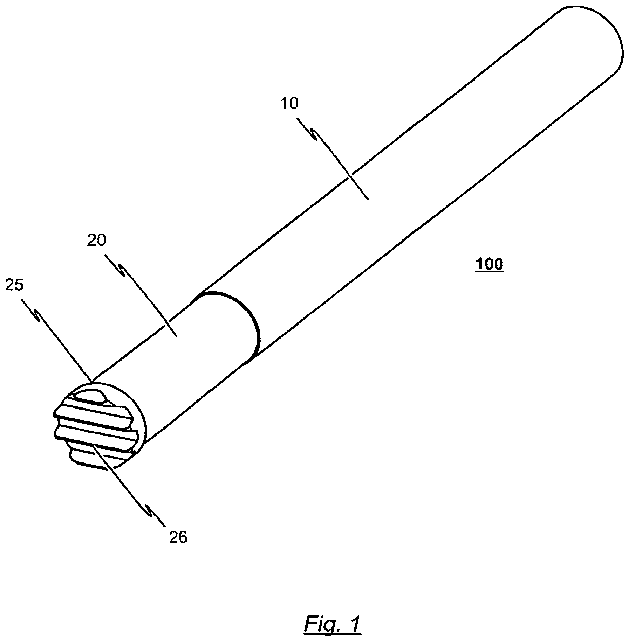

Nachfolgend wird unter Bezugnahme auf die Darstellungen in den Figuren 1 bis 3 eine erste exemplarische Ausführungsform einer Energieverzehrvorrichtung 100 gemäß der vorliegenden Erfindung beschrieben.

Wie es insbesondere der Darstellung in Fig. 1 entnommen werden kann, besteht die Energieverzehrvorrichtung 100 im Wesentlichen aus einem Energieverzehrelement 10 und einem Gegenelement 20.

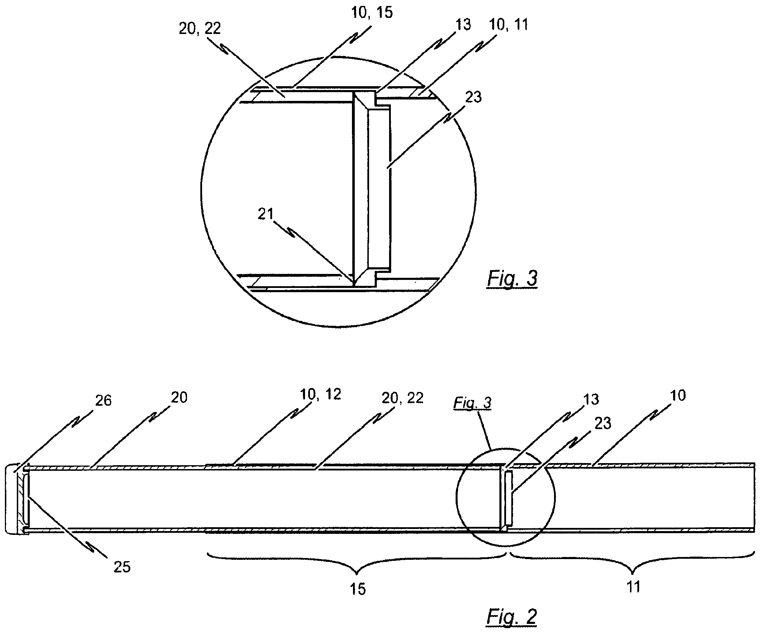

Die in Fig. 1 dargestellte Energieverzehrvorrichtung ist in einer Längsschnittdarstellung in Fig. 2 gezeigt. Dieser Darstellung kann entnommen werden, dass das Gegenelement 20 als Kolben und der dem Gegenelement 20 zugewandte Bereich 12 des Energieverzehrelementes 10 als Zylinder ausgebildet ist. Der dem Energieverzehrelement 10 zugewandte Bereich 22 des als Kolben ausgebildeten Gegenelementes 20 ist teleskopartig von dem als Zylinder ausgebildeten Bereich 12 des Energieverzehrelementes 10 aufgenommen.

Nachfolgend werden im Einzelnen der Aufbau und die Funktionsweise der in Fig. 1 dargestellten exemplarischen Ausführungsform der erfindungsgemäßen Energieverzehrvorrichtung 100 unter Bezugnahme auf die Figuren 2 und 3 näher beschrieben.

Demnach ist bei der in Fig. 2 dargestellten Ausführungsform der Energieverzehrvorrichtung 100 das Energieverzehrelement 10 einstückig aus Faserverbundwerkstoff ausgebildet. Im Einzelnen weist das Energieverzehrelement 10 einen Energieverzehrbereich 11 sowie einen Führungsbereich 15 auf. Am Übergang zwischen dem Energieverzehrbereich 11 und dem Führungsbereich 15 ist eine Kante vorgesehen, welche einen Anschlag 13 ausbildet, an den das als Kolben ausgebildete Gegenelement 20 anstößt.

Denkbar hierbei ist es, dass die Stirnseite 21 des dem Energieverzehrelement 10 zugewandten Bereiches 22 des als Kolben ausgebildeten Gegenelementes 20 an den Anschlag 13 des Energieverzehrbereiches 11 direkt anstößt. Bei der in Fig. 2 dargestellten Ausführungsform der Energieverzehrvorrichtung 100 jedoch ist an der Stirnseite 21 des als Kolben ausgebildeten Gegenelementes 20 ein Kegelring 23 vorgesehen, so dass dieser Kegelring 23 an den Anschlag 13 des Energieverzehrbereiches 11 anstößt. Der Kegelring 23 ist dabei fest mit der Stirnseite 21 des Gegenelementes 20 verbunden.

Der Führungsbereich 15 des Energieverzehrelementes 10 ist bei der dargestellten Ausführungsform der Energieverzehrvorrichtung 100 als Führungsrohr ausgebildet, dessen Innendurchmesser größer als der Außendurchmesser des als Kolben ausgebildeten Gegenelementes 20 ist. Auf diese Weise kann der dem Energieverzehrelement 10 zugewandte Bereich 22 des Gegenelementes 20 teleskopartig von dem Energieverzehrelement aufgenommen werden.

Wie es insbesondere der Darstellung in Fig. 3 entnommen werden kann, weist das insgesamt rohrförmig ausgebildete Energieverzehrelement 10 beim Energieverzehrbereich 11 einen Innendurchmesser auf, welcher kleiner als der Außendurchmesser des Gegenelementes 20 ist. Die beim Übergang zwischen dem Führungsbereich 15 und dem Energieverzehrbereich 11 vorgesehene Kante 13 stellt somit einen Anschlag dar, an den das als Kolben ausgebildete Gegenelement 20 anstößt.

Die in Fig. 2 dargestellte Energieverzehrvorrichtung 100 ist dahingehend ausgelegt, dass in die Energieverzehrvorrichtung 100, und insbesondere in das als Kolben ausgebildete Gegenelement 20 eingeleitete Stoßkräfte in die dem Energieverzehrelement 10 abgewandte Stirnseite 25 des Gegenelementes 20 eingeleitet werden. Hierzu ist es denkbar, an der Stirnseite 25 des Gegenelementes 20 einen Aufkletterschutz 26 anzubringen. Dies ist insbesondere dann von Vorteil, wenn die Energieverzehrvorrichtung 100 als Stoßsicherung in einem spurgeführten Fahrzeug, insbesondere Schienenfahrzeug, eingesetzt wird. Der Aufkletterschutz 26 verhindert im Crashfall, dass die Stirnseite 25 des als Kolben ausgebildeten Gegenelementes 20 horizontal ausscheren kann.

Im normalen Betrieb, wenn also die über die Stirnseite 26 in das Gegenelement 20 eingeleiteten Stoßkräfte nicht die für das Ansprechen der Energieverzehrvorrichtung 100 kritische Stoßkraft überschreiten, werden die in das Gegenelement 20 eingeleiteten Stoßkräfte über die Stirnseite 21 des Gegenelementes 20 (und falls vorhanden über den Kegelring 23) in den Anschlag 13 des Energieverzehrbereiches 11 des Energieverzehrelementes 10 eingeleitet. Von dort werden die Stoßkräfte auf die Struktur des Wagenkastens übertragen, mit welchem die Energieverzehrvorrichtung 100 verbunden ist.

Die für das Ansprechen der Energieverzehrvorrichtung 100 kritische Stoßkraft wird bei der erfindungsgemäßen Lösung zum einen durch die Materialeigenschaft des Energieverzehrbereiches 11, insbesondere durch dessen Festigkeit, bestimmt. In diesem Ausführungsbeispiel besteht der Energieverzehrbereich 11 aus einem Faserverbundwerkstoff. Zum anderen wird die für das Ansprechen der Energieverzehrvorrichtung 100 kritische Stoßkraft durch Triggerung des Energieverzehrbereiches 11 und die Geometrie des Kegelringes 23 bestimmt. Beim Ansprechen der Energieverzehrvorrichtung 100 wird das Faserverbundmaterial der Innenwand des Energieverzehrbereiches 11 von dem sich relativ zu dem Energieverzehrelement 10 in Richtung des Energieverzehrbereiches 11 bewegenden Gegenelement 20 nicht-duktil zerfasert.

Wesentlich ist dabei, dass von dem sich in Richtung Energieverzehrbereich 11 bewegenden Gegenelement 20 nur das Material des Energieverzehrbereiches 11 nicht-duktil zerfasert wird, welches die Innenwand des Energieverzehrbereiches 11 bildet. Beim Energieverzehr schiebt sich somit das Gegenelement 20 weiter in das Energieverzehrelement 10 hinein und schabt dabei den Innenbereich des Energieverzehrbereiches 11 aus. Bei diesem Abschaben wird Material des Energieverzehrbereiches 11 zerfasert, wobei die Außenwand des Energieverzehrbereiches 11 jedoch nicht in Mitleidenschaft gezogen wird. Die verbleibende Außenwand des Energieverzehrbereiches 11 dient als Führungsfläche zum Führen der Bewegung des Gegenelementes 20 gegenüber dem Energieverzehrelement 10.

Damit beim Ansprechen der Energieverzehrvorrichtung 100 nur das Faserverbundmaterial des Energieverzehrbereiches 11, und nicht beispielsweise das Material des Gegenelementes 20 zerfasert wird, sollte die Stirnseite 21 des Gegenelementes 20 oder (falls vorhanden) der Kegelring 23 eine im Vergleich zu dem Energieverzehrbereich 11 höhere Festigkeit aufweisen.

Wie es insbesondere den Darstellungen in Fig. 2 und Fig. 3 entnommen werden kann, ist das als Kolben ausgeführte Gegenelement 20 als ein an seiner dem Energieverzehrelement 10 zugewandten Stirnseite 21 offener Hohlkörper ausgebildet. Die bei der Bewegung des Gegenelementes 20 relativ zu dem Energieverzehrelement 10 entstehenden Bruchteile des aus Faserverbundwerkstoff gebildeten Energieverzehrbereiches 11 werden dabei (zumindest teilweise) im Inneren des Hohlkörpers aufgenommen. Dies hat den Vorteil, dass bei dem Zerfasern des Energieverzehrbereiches 11 keine Bruchteile des Faserverbundwerkstoffes nach außen gelangen können.

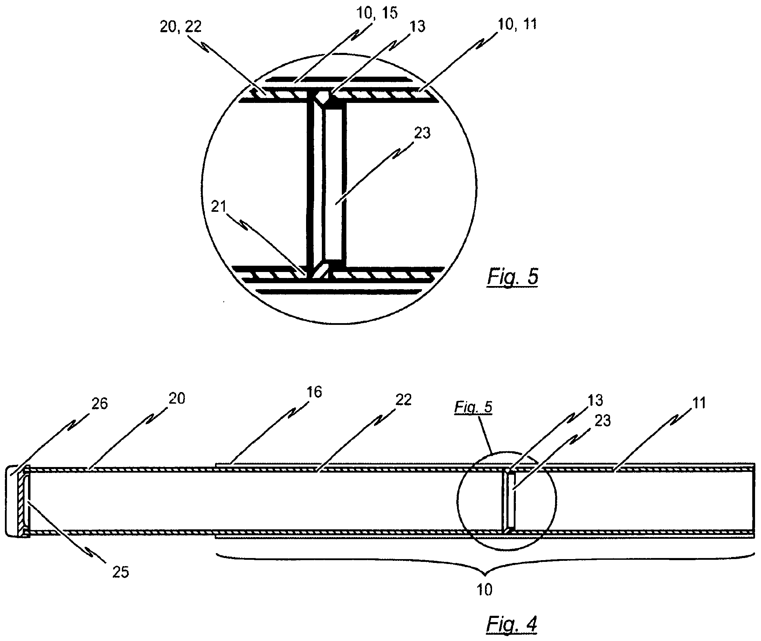

In Fig. 4 ist eine weitere Ausführungsform der erfindungsgemäßen Energieverzehrvorrichtung 100 dargestellt. Fig. 5 zeigt einen Ausschnitt aus Fig. 4 am Übergangsbereich zwischen dem Gegenelement 20 und dem Energieverzehrbereich 11.

Die in Fig. 4 dargestellte Ausführungsform der erfindungsgemäßen Energieverzehrvorrichtung 100 entspricht im Wesentlichen der zuvor unter Bezugnahme auf die Darstellungen in Fig. 2 und Fig. 3 beschriebenen Ausführungsform. Bei der in Fig. 4 gezeigten Ausführungsform der erfindungsgemäßen Energieverzehrvorrichtung 100 ist allerdings der Führungsbereich des Energieverzehrelementes nicht einstückig mit dem Energieverzehrbereich 11 ausgebildet.

Vielmehr ist - wie es insbesondere der Darstellung in Fig. 5 entnommen werden kann - bei der in Fig. 4 dargestellten Ausführungsform der Energieverzehrvorrichtung 100 das Energieverzehrelement 10 aus einem Führungsrohr 16 gebildet, welches beispielsweise aus Faserverbundwerkstoff oder einem anderen Material gebildet sein kann, wobei in diesem Führungsrohr 15 der aus Faserverbundwerkstoff gebildete Energieverzehrbereich 11 aufgenommen ist. Die Führung der Bewegung des als Kolben ausgebildeten Gegenelementes 20 relativ zu dem Energieverzehrelement 10 wird bei der in Fig. 4 dargestellten Ausführungsform über die Innenfläche des Führungsrohres 15 übernommen.

Beim Energieverzehr wird - im Unterschied zu der in Fig. 2 dargestellten Ausführungsform - nicht nur der Innenbereich des Energieverzehrbereiches 11 zerfasert, sondern das gesamte Material des Energieverzehrbereiches 11.

Die Erfindung ist nicht auf die unter Bezugnahme auf die Zeichnungen dargestellten Ausführungsformen der Energieverzehrvorrichtung 100 beschränkt. Vielmehr sind weitere Ausgestaltungen oder Abänderungen denkbar.

Gemäß einer nicht zur beanspruchten Erfindung gehörenden Ausführungsform ist es denkbar, das Energieverzehrelement 10 als Kolben und zumindest der dem Energieverzehrelement 10 zugewandte Bereich 22 des Gegenelementes 20 als Zylinder auszubilden, wobei der dem Gegenelement 20 zugewandte Bereich 12 des Energieverzehrelementes 10 von dem Gegenelement 20 teleskopartig aufgenommen wird.

Ferner ist es denkbar, bei der in den Fig. 2 dargestellten Ausführungsform den Außenbereich des Energieverzehrelementes 10, d.h. die Außenwand des Energieverzehrbereiches 11 einerseits und den Führungsbereich 15 andererseits, durch eine geeignete Ausrichtung der Fasern des Faserverbundwerkstoffes insgesamt fester zu gestalten im Vergleich zu dem Bereich des Energieverzehrbereiches 11, der beim Ansprechen der Energieverzehrvorrichtung 100 nicht-duktil zerfasert wird.

## Patentansprüche

1. Energieverzehrvorrichtung (100), insbesondere in Gestalt einer Stoßsicherung für ein spurgeführtes Fahrzeug, mit einem Energieverzehrelement (10) und einem derart mit dem Energieverzehrelement (10) zusammenwirkenden Gegenelement (20), dass sich bei Überschreiten einer kritischen, in die Energieverzehrvorrichtung (100) eingeleiteten Stoßkraft das Gegenelement (20) und das Energieverzehrelement (10) unter gleichzeitigem Verzehr von zumindest einem Teil der in die Energieverzehrvorrichtung (100) eingeleiteten Stoßenergie relativ zueinander aufeinander zu bewegen, wobei das Energieverzehrelement (10) mindestens einen Energieverzehrbereich (11) aus Faserverbundwerkstoff aufweist, welcher bei der Bewegung des Gegenelementes (20) relativ zu dem Energieverzehrelement (10) zumindest teilweise nicht-duktil zerfasert wird, wobei das Gegenelement (20) als ein an seiner dem Energieverzehrelement (10) zugewandten Stirnseite (21) offener Hohlkörper ausgebildet ist derart, dass die bei der Bewegung des Gegenelementes (20) relativ zu dem Energieverzehrelement (10) entstehenden Bruchteile des aus Faserverbundwerkstoff gebildeten Energieverzehrbereiches (11) zumindest teilweise im Inneren des Hohlkörpers aufnehmbar sind, wobei das Gegenelement (20) als Kolben und zumindest der dem Gegenelement (20) zugewandte Bereich (12) des Energieverzehrelementes (10) als Zylinder ausgebildet ist, wobei der dem Energieverzehrelement (10) zugewandte Bereich (22) des Gegenelementes (20) von dem Energieverzehrelement (10) teleskopartig aufgenommen ist derart, dass die Stirnseite (21) des dem Energieverzehrelement (10) zugewandten Bereiches (22) des Gegenelementes (20) an einen Anschlag (13) des Energieverzehrbereiches (11) anstößt; und
wobei an der Stirnseite (21) des Gegenelementes (20) ein Kegelring (23) vorgesehen ist, der an den Anschlag (13) des Energieverzehrbereiches (11) anstößt.

2. Energieverzehrvorrichtung (100) nach Anspruch 1,
wobei die Länge des Energieverzehrbereiches (11), die bei einer Bewegung des Gegenelementes (20) relativ zu dem Energieverzehrelement (10) nicht-duktil zerfasert wird, von der Wegstrecke der Relativbewegung zwischen dem Gegenelement (20) und dem Energieverzehrelement (10) abhängt.

3. Energieverzehrvorrichtung (100) nach Anspruch 1 oder 2,
wobei zumindest die Stirnseite (21) des Gegenelementes (20) eine im Vergleich zu dem Energieverzehrbereich (11) höhere Festigkeit aufweist.

4. Energieverzehrvorrichtung (100) nach einem der Ansprüche 1 bis 3,
wobei das Energieverzehrelement (10) ein Führungsrohr (15) aufweist, dessen Innendurchmesser größer als der Außendurchmesser des Gegenelementes (20) ist, so dass der dem Energieverzehrelement (10) zugewandte Bereich (22) des Gegenelementes (20) teleskopartig von dem des Energieverzehrelementes (10) aufnehmbar ist.

5. Energieverzehrvorrichtung (100) nach Anspruch 4,
wobei das Führungsrohr (15) und der Energieverzehrbereich (11) einstückig aus Faserverbundwerkstoff gebildet sind.

6. Energieverzehrvorrichtung (100) nach Anspruch 4,
wobei der aus Faserverbundwerkstoff gebildete Energieverzehrbereich (11) im Inneren des Führungsrohres (15) derart angeordnet ist, dass die Stirnseite (21) des Gegenelementes (20) an eine dem Gegenelement (20) zugewandte Stirnseite (14) des Energieverzehrbereiches (11) anstößt.

7. Energieverzehrvorrichtung (100) nach einem der vorhergehenden Ansprüche,
wobei mindestens eine Führungsfläche (15a) vorgesehen ist zum Führen der Bewegung des Gegenelementes (20) relativ zu dem Energieverzehrelement (10).

8. Energieverzehrvorrichtung (100) nach einem der vorhergehenden Ansprüche,
wobei das Energieverzehrelement (10) vollständig aus Faserverbundwerkstoff gebildet ist.

9. Energieverzehrvorrichtung (100) nach einem der vorhergehenden Ansprüche,
wobei das Gegenelement (20) aus Faserverbundwerkstoff gebildet ist.

10. Energieverzehrvorrichtung (100) nach einem der vorhergehenden Ansprüche,
wobei das Ansprechverhalten der Energieverzehrvorrichtung (100) und/oder der Betrag der mit der Energieverzehrvorrichtung (100) insgesamt verzehrbaren Stoßenergie durch geeignete Wahl der Wandstärke und/oder Festigkeit des Energieverzehrbereiches (21) vorab einstellbar ist.

11. Verwendung der Energieverzehrvorrichtung (100) nach einem der vorhergehenden Ansprüche als Stoßsicherung im Untergestell oder in einer Wagenkastenstruktur eines spurgeführten Fahrzeuges, insbesondere eines Schienenfahrzeuges, oder als Stoßsicherung einer stationären Anlage, insbesondere eines Prellbocks.

## Claims

1. An energy absorption device (100), in particular in the form of impact protection for a track-guided vehicle, comprising an energy-absorbing element (10) and a counter element (20) which interacts with the energy-absorbing element (10) such that upon the exceeding of a critical impact force introduced into the energy absorption device (100), the counter element (20) and the energy-absorbing element (10) move relatively toward each other while simultaneously absorbing at least a portion of the impact energy introduced into the energy absorption device (100), wherein the energy-absorbing element (10) comprises at least one energy-absorbing region (11) of fibrous composite material which at least partly frays in non-ductile manner upon the movement of the counter element (20) relative to the energy-absorbing element (10), wherein the counter element (20) is designed as a hollow body open at its front face (21) facing the energy-absorbing element (10) such that upon the counter element (20) moving relative to the energy-absorbing element (10), at least some of the resulting fragments of the energy-absorbing region (11) of fibrous composite material can be received in the interior of the hollow body, wherein the counter element (20) is configured as a plunger and at least the region (12) of the energy-absorbing element (10) facing the counter element (20) is configured as a cylinder, wherein the region (22) of the counter element (20) facing the energy-absorbing element (10) is telescopically accommodated by the energy-absorbing element (10) such that the front face (21) of the region (22) of the counter element (20) facing the energy-absorbing element (10) abuts against a stop (13) of the energy-absorbing region (11); and
wherein a tapered ring (23) which abuts against the stop (13) of the energy-absorbing region (11) is provided on the front face (21) of the counter element (20).

2. The energy absorption device (100) according to claim 1,
wherein the length of the energy-absorbing region (11) which frays in non-ductile manner upon the counter element (20) moving relative to the energy-absorbing element (10) depends on the distance of the relative movement between the counter element (20) and the energy-absorbing element (10).

3. The energy absorption device (100) according to claim 1 or 2,
wherein at least the front face (21) of the counter element (20) has a higher strength than the energy-absorbing region (11).

4. The energy absorption device (100) according to one of claims 1 to 3,
wherein the energy-absorbing element (10) comprises a guide tube (15), the inner diameter of which is larger than the outer diameter of the counter element (20) such that the region (22) of the counter element (20) facing the energy-absorbing element (10) can be telescopically accommodated by the energy-absorbing element (10).

5. The energy absorption device (100) according to claim 4,
wherein the guide tube (15) and the energy-absorbing region (11) are integrally formed from fibrous composite material.

6. The energy absorption device (100) according to claim 4,
wherein the energy-absorbing region (11) formed from fibrous composite material is arranged within the interior of the guide tube (15) such that the front face (21) of the counter element (20) abuts against a front face (14) of the energy-absorbing region (11) facing the counter element (20).

7. The energy absorption device (100) according to one of the preceding claims, wherein at least one guide surface (15a) is provided to guide the movement of the counter element (20) relative to the energy-absorbing element (10).

8. The energy absorption device (100) according to one of the preceding claims, wherein the energy-absorbing element (10) is formed entirely from fibrous composite material.

9. The energy absorption device (100) according to one of the preceding claims, wherein the counter element (20) is formed from fibrous composite material.

10. The energy absorption device (100) according to one of the preceding claims, wherein the response behavior of the energy absorption device (100) and/or the total amount of impact energy able to be absorbed by the energy absorption device (100) can be predefined by the appropriate selection of the wall thickness and/or strength to the energy-absorbing region (21).

11. Use of the energy absorption device (100) according to one of the preceding claims as impact protection in the undercarriage or in a structure of a railcar body of a track-guided vehicle, in particular a railway vehicle, or as impact protection for a stationary installation, in particular a buffer stop.

## Revendications

1. Dispositif de consommation d'énergie (100), en particulier sous la forme d'une sécurité antichocs pour un véhicule guidé sur rails, comprenant un élément de consommation d'énergie (10) et un élément antagoniste (20) qui coopère avec l'élément de consommation d'énergie (10) de telle façon que, lors d'un dépassement d'une force de choc critique appliquée au dispositif de consommation d'énergie (100), l'élément antagoniste (20) et l'élément de consommation d'énergie (10) se déplacent relativement l'un par rapport à l'autre en rapprochement l'un de l'autre en consommant simultanément au moins une partie de l'énergie du choc appliqué au dispositif de consommation d'énergie (100), dans lequel l'élément de consommation d'énergie (10) comprend au moins une zone de consommation d'énergie (11) en un matériau composite à base de fibres, qui est au moins partiellement effilochée de manière non-ductile lors du mouvement de l'élément antagoniste (20) par rapport à l'élément de consommation d'énergie (10), dans lequel l'élément antagoniste (20) est réalisé comme un corps creux ouvert sur sa face frontale (21) tournée vers l'élément de consommation d'énergie (10), de telle façon que les débris, de la zone de consommation d'énergie (11) réalisée en matériau composite à base de fibres, qui se produisent lors du mouvement de l'élément antagoniste (20) par rapport à l'élément de consommation d'énergie (10) peuvent être reçus au moins partiellement à l'intérieur du corps creux, dans lequel l'élément antagoniste (20) est réalisé sous forme de piston et au moins la région (12), tournée vers l'élément antagoniste (20), de l'élément de consommation d'énergie (10) est réalisée sous forme de cylindre, et dans lequel la région (22), tournée vers l'élément de consommation d'énergie (10), de l'élément antagoniste (20) est reçue de façon télescopique par l'élément de consommation d'énergie (10), de telle façon que la face frontale (21) de la région (22), tournée vers l'élément de consommation d'énergie (10), de l'élément antagoniste (20) vient buter contre une butée (13) de la zone de consommation d'énergie (11) ; et dans lequel, au niveau de la face frontale (21) de l'élément antagoniste (20), il est prévu une bague conique (23) qui vient buter contre la butée (13) de la zone de consommation d'énergie (11).

2. Dispositif de consommation d'énergie (100) selon la revendication 1, dans lequel la longueur de la zone de consommation d'énergie (11) qui est effilochée de manière non-ductile lors d'un mouvement de l'élément antagoniste (20) par rapport à l'élément de consommation d'énergie (10) dépend du trajet du mouvement relatif entre l'élément antagoniste (20) et l'élément de consommation d'énergie (10).

3. Dispositif de consommation d'énergie (100) selon la revendication 3, dans lequel au moins la face frontale (21) de l'élément antagoniste (20) présente une solidité plus élevée par comparaison à la zone de consommation d'énergie (11).

4. Dispositif de consommation d'énergie (100) selon l'une des revendications 1 à 3,
dans lequel l'élément de consommation d'énergie (10) comprend un tube de guidage (15) dont le diamètre intérieur est plus grand que le diamètre extérieur de l'élément antagoniste (20), de sorte que la région (22), tournée vers l'élément de consommation d'énergie (10), de l'élément antagoniste (20) peut être reçue de manière télescopique par l'élément de consommation d'énergie (10).

5. Dispositif de consommation d'énergie (100) selon la revendication 4, dans lequel le tube de guidage (15) et la zone de consommation d'énergie (11) sont formés d'un seul tenant en un matériau composite à base de fibres.

6. Dispositif de consommation d'énergie (100) selon la revendication 4, dans lequel la zone de consommation d'énergie (11) formée en matériau composite à base de fibres est agencée à l'intérieur du tube de guidage (15) de telle façon que la face frontale (21) de l'élément antagoniste (20) vient buter contre une face frontale (14), tournée vers l'élément antagoniste (20), de la zone de consommation d'énergie (11).

7. Dispositif de consommation d'énergie (100) selon l'une des revendications précédentes,
dans lequel il est prévu au moins une surface de guidage (15a) pour guider le mouvement de l'élément antagoniste (20) par rapport à l'élément de consommation d'énergie (10).

8. Dispositif de consommation d'énergie (100) selon l'une des revendications précédentes,
dans lequel l'élément de consommation d'énergie (10) est entièrement formé en matériau composite à base de fibres.

9. Dispositif de consommation d'énergie (100) selon l'une des revendications précédentes,
dans lequel l'élément antagoniste (20) est réalisé en matériau composite à base de fibres.

10. Dispositif de consommation d'énergie (100) selon l'une des revendications précédentes,
dans lequel le comportement de réaction du dispositif de consommation d'énergie (100) et/ou la valeur de l'énergie de choc capable d'être au total consommée avec le dispositif de consommation d'énergie (100) sont susceptibles d'être réglés au préalable par un choix approprié de l'épaisseur de paroi et/ou de la solidité de la zone de consommation d'énergie (21).

11. Utilisation du dispositif de consommation d'énergie (100) selon l'une des revendications précédentes comme sécurité antichocs dans le châssis ou dans une structure de caisse de wagon d'un véhicule guidé sur rails, en particulier d'un véhicule ferroviaire, ou comme sécurité antichocs d'une installation stationnaire, en particulier d'un heurtoir.
